# EUROPEAN PATENT SPECIFICATION

(11) **EP 0 846 928 B1**
(45) Date of publication and mention of the grant of the patent: **05.02.2003**
(21) Application number: 97120346.8
(22) Date of filing: 20.11.1997
(51) Int. Cl.: F25D 3/11, A23L 3/36

(54) **Apparatus for continuously deep-freezing food products**
Vorrichtung zum ununterbrochenen Tiefgefrieren von Lebensmitteln
Appareil pour surgeler des produits alimentaires en continu

(30) Priority: 05.12.1996 IT MI962556
(43) Date of publication of application: 10.06.1998
(73) Proprietor: Pugnale S.r.l., 20023 Cerro Maggiore (MI) (IT)
(72) Inventor: Pugnale, Bruno, 21040 Origgio (VA) (IT)
(74) Representative: Klausner, Erich

(56) References cited:
- EP-A- 0 445 476
- WO-A-91/05212
- AU-B- 545 138
- GB-A- 264 825
- GB-A- 2 276 440
- US-A- 4 276 753
- US-A- 5 327 817

## Description

The present invention relates to an apparatus for continuously deep-freezing food products, apt to hold in a mutually loose condition the separate components of the products in order to yield be it homogeneous products to be admixed after the deep-freezing process, be it assorted products which are already mixed from the start of the deep-freezing process, as well as special mixed products, of a different nature.

Already since several years there have been made available on the market deep-frozen food products, such as specific types of vegetable food products, both of an homogeneous and a mixed type, due to the great advantages consisting of a very good preservability, the maintenance of the products organoleptic properties, the great practicality of selling and using metered portions of said products.

Of late has also undergone expansion the sale of mixed products, such as seasoned risotto and alimentary pasta products, ready-for-use.

Prior systems for deep-freezing large amounts of food products provide for conveying the latter at a low speed through a cooled tunnel or bringing said food products to refrigerating rooms where they are statically deep-frozen.

The features of the preamble of claim 1 are known from document WO-A-91 05 212. The document discloses a freezing tunnel, which is used for freezing scrap in recycling scrap operations. The tunnel has a scrap inlet and a scrap outlet, is rotated about its central longitudinal axis and is inclined downwardly towards the tunnel outlet. Through the tunnel gaseous cryogenic material (e.g. liquid nitrogen) is discharged and a plurality of fin is provided in the interior of the tunnel to drop the scrap.
This apparatus is mainly provided for freezing scrap (e.g. polyvinylchloride or rubber products) and not suitable for food products, which require rapid and efficient freezing.

These prior systems, however, do not allow the product particles or grains to be kept in a mutually loose condition and, even less so, to deep-freeze already seasoned and pasta and risotto food products possibly including vegetable, the use of which is now widely expanding as already stated.

Accordingly, the object of the present invention is to provide a deep-freezing apparatus having the following features:
- a high hourly output and a low labour requirement,
- of comparatively small' dimensions and low cost so as to be readily suitable also for small to medium users;
- a continuous faster deep-freezing operation;
- maintaining in a loose or separated condition the single particles or grains of the starting food product, when in the final deep-frozen condition;
- a possibility of continuously adding seasoning substances (for example with pasta and risotto food products) during the deep-freezing step;
- a highly efficient thermal exchange between the deep-freezing gas and the food products to be deep-frozen.

According to the invention, the deep-freezing apparatus comprises the features as defined in claim 1.

The deep-freezing process is carried out by using a cryogenic gas such as, for example, liquid nitrogen or carbon dioxide, which are supplied through a nozzle diffuser arranged at the outlet of the apparatus in order to create a very low temperature gaseous stream which is conveyed upwardly in countercurrent toward the inlet of the food product, as a result of the action by the fan conveying the gas stream toward an outlet stack.

Decisive for achieving the above mentioned objects of providing a rapid deep-freezing process, of keeping the food product in a loose-grain form and of providing a very efficient thermal exchange with a comparatively low use of a cryogenic liquid gas, have been found two measures, both intended for improve the thermal exchange between the food product and super-cooled stream.

A first measure comprises providing on the inner surface of the drum a plurality of adjustably sloped fins continuously driving the food product from the periphery of the drum, in particular in an area where an accumulation of the food product occurs, by causing it to fall again toward the central part of the rotary drum.

To that end, said food product mixing fins can be arranged either on planes substantially perpendicular to the rotary axis of the drum, or helically on the inner surface of the drum, wherein the screw pitch arrangement of the blades is opposite to the food product feeding direction in order to achieve a more efficient and more even mixing effect of the product, distributed along the overall length of the drum as well as a reduction of the food product feeding speed toward the oulet, thereby improving the deep-freezing effect.

The second measure, synergically cooperating with the first, is that of causing the cooling stream to recirculate, which is attained thanks to a plurality of fans offset from the vertical median plane of the drum and rotatively driven in opposite directions one from the other, alternatively.

The concept is to perform, within one and the same refrigerating environment, while maintaining a continuously operating process, the conveyance of the product through cascade arranged processing chambers in each of which the product comes into contact with the cooling stream, with the highest possible yield.

The above has been effectively achieved thanks to the circulation of the deep-freezing stream in every sector within said drum, by means of a plurality of fans, suspended on the uppermost portion of the drum, which cause the supercooled stream to recirculate in the opposite direction from one drum sector to its adjacent one.

This provision has been found to be very effective for rapidly cooling the food product resulting in reducing the length of the drum and, accordingly, the cost and overall size of the apparatus.

In this connection it is evident that the cooling cycle can be adapted to the specific type of food product being processed, by varying the rotary speed of the drum and/or the slope thereof.

An embodiment of the invention shall be disclosed in detail hereinafter, having reference to the accompanying drawings.

In the drawings:
Figure 1 is a longitudinal vertical-section view illustrating the device according to the invention;
Figure 2 is a top plan section view of the subject device taken along the line 2-2 of Figure 1;

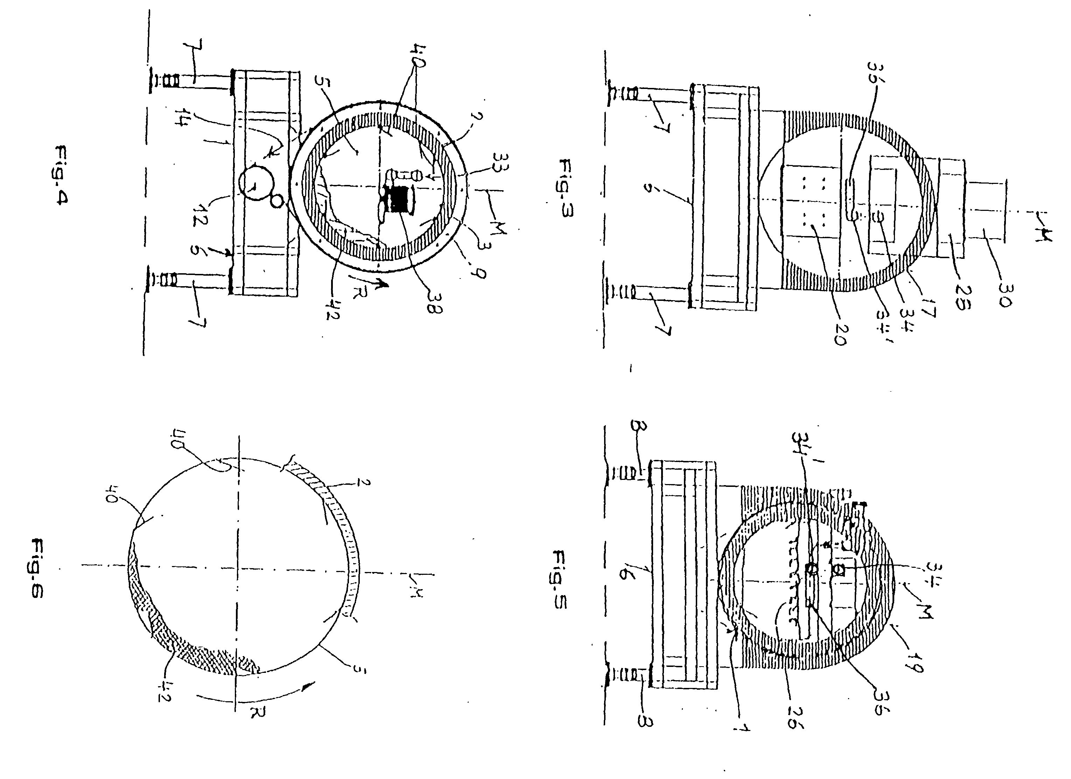

Figure 3 is a cross-section view of the device taken along the line 3-3 of Figure 1;
Figure 4 is a cross-section view of the device taken along the line 4-4 of Figure 1;
Figure 5 illustrates a cross-section of the device taken along the line 5-5 of Figure 1;
Figure 6 is a schematic view illustrating the mixing of the food product performed by mixing blades fitted inside the drum.

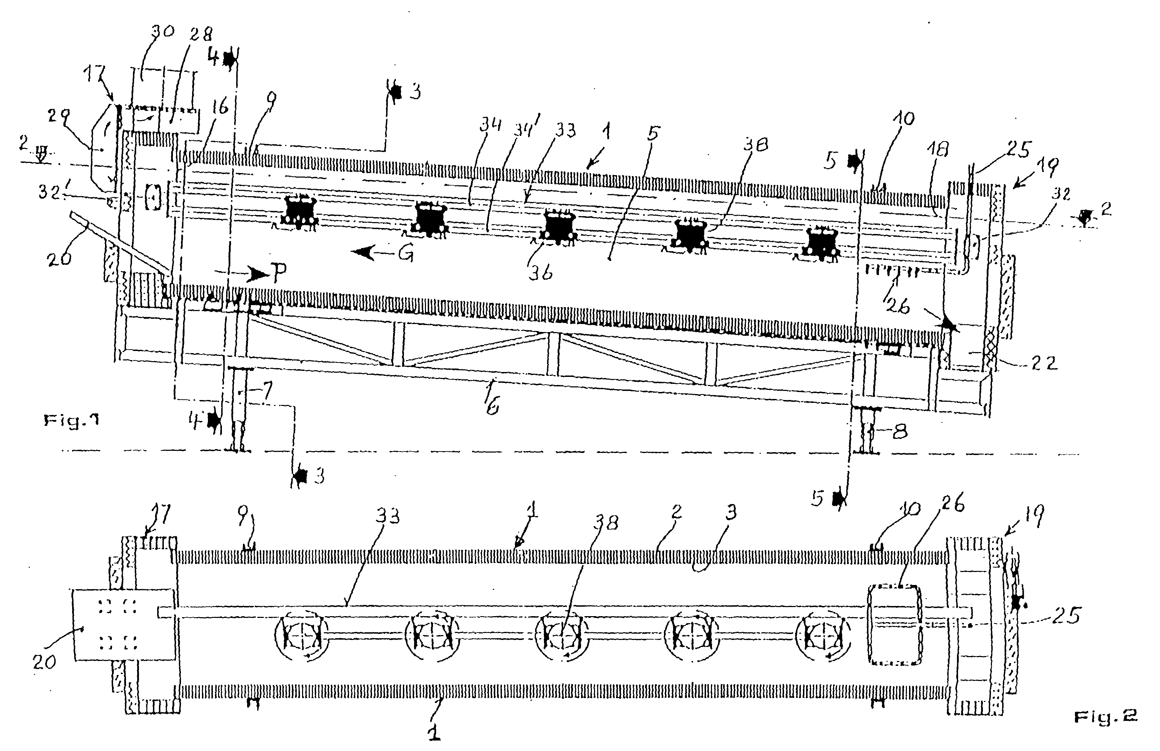

As shown in figure 1, the apparatus for continuously deep-freezing food products comprises a drum 1 consisting of a double metal pipe 2 and 3, the space between which is insulated. The drum 1 is supported by a framework 6 provided with supporting elements 7 and 8 the height of which can be adjusted in order to vary the slope of the drum axis as needs be.

The drum can turn on flanges 9 and 10 bearing on rollers and it is driven by a motor 12 (see Figure 4) for example by a belt 14. The first and second ends 16 and 18 of said drum are provided with thermally insulating end structures 17 and 19 comprising respective loading and unloading elements 20 and 22 for the food product.

A duct 25 extending throughout the thermally insulating structure 19, feeds a cryogenic liquid to be atomized by means of a plurality of atomizing nozzles 26 to provide a minimum temperature inner area of even less than -90°C, at the second end 18 of the rotary drum 1. Within the inner area 5 of said drum, the cryogenic stream, generated by atomizing the liquefied cryogenic gas, rises according to the arrow G, whereas the food product, gradually introduced into the loading hopper 20, will be driven downward along the rotary drum in a countercurrent direction, as indicated by the arrow P. The thermally exhausted gas is sucked off at the first end 16 for the product to be deep-frozen, by a suction device 28 and it is conveyed to an outlet stack 30 through a conveying duct 29.

In the inlet structure 17, as well as in the outlet structure 19, supporting elements 32, 32' for supporting a bridge structure 33 are provided, said bridge structure consisting of a pair of tubular rods 34, 34' to which are cantilever-wise coupled a plurality of shelves 36 each supporting a fan 38. Said fans, which are spaced from one another, turn, as shown in Figure 2, in reciprocally opposite directions to effectively distribute and homogenize the cooling gas throughin the several drum sectors.

Figures 2 and 4 in particular illustrate the arrangement of the fans 38 and related supporting shelves 36 offset from the median vertical plane M of the drum, such an arrangement being so designed as to cause the cryogenic gas to swirl in said drum.

Figures 4 and 6 illustrate the arrangement and operation of the stirring fins 40.

Figure 6 schematically illustrates the shifting in the drum rotary direction, of the food product mass 42 undergoing cooling. The fins 40 are coupled to the inner surface of the inner pipe 3 of said drum 1 so as to cause the food product mass 42 to be detached from the bottom in such a manner as to remove layers thereof closest to said inner surface, causing them to fall to the central portion of the drum, thereby providing a good contact between the food product mass and the cryogenic gas.

The fins 40 can be arranged on adjoining planes perpendicular to the axis of the drum, but, more effectively, they can be helically arranged, so as to affect the overall longitudinal extension of the drum and provide an evenly distributed and constant mixing effect.

The apparatus as disclosed and illustrated relies substantially on the use of cryogenic gases which allow to reach very low temperatures, for achieving the object of the invention of a small sized rapid deep-freezing system, suitable for small concerns, in particular while solving at the same time the problem stemming from the new demand of preparing deep-frozen seasoned risotto and pasta food products. Actually, the apparatus allows to continuously add seasoning substances during the deep-freezing stage-step, while preventing the sauces from being polluted because of prolonged handling in the presence of air, since the atmosphere inside the rotary drum substantially consists of inert gases such as nitrogen or carbon dioxide.

Moreover, the apparatus has a very high operating flexibility, since it allows to also deep-freeze granular vegetable products while keeping them in a mutually loose condition and to packing them in any desired metered quantity.

In effect the deep-frozen product, being in a granular and loose condition, can be suitably stored before being divided into different size sales packages. Moreover, it is possible to meter and distribute the product also in multidose bags since, said granular product having been deep-frozen individually the user can easily remove from a package only the quantity strictly necessary, thus avoiding unnecessary waste; moreover, the single doses of the product can be weighed in a more precise manner.

The rapid deep-freezing process achieved through the product being exposed to the effect of a low temperature gas distributed in a more effective manner tanks to the provision of fans and to the efficient mixing effect attained through the fins suitably arranged in said rotary drum, allows to obtain a deep-frozen product presenting completely loose particles and to adapt the deep-freezing cycle to the particular size and mixing ratios of the food product components.

While preserving the same basic concept of the invention but not being covered by the scope of the claims, the apparatus can also be employed for cooling cycles different from that based on cryogenic gases, for example by utilizing known cooling systems, by adjusting the size of the rotary drum and suitably arranging cooling coils or closed coil evaporators inside the drum along its overall extension or only at the two ends thereof, yet while continuing to rely on the system of mixing the product and of recirculating the cooled stream, as herein disclosed and illustrated.

## Claims

1. An apparatus for continuously deep-freezing food products, including:
- a rotary drum (1) having a first end (16) for introducing a product to be deep-frozen and a second end (18) for discharging the deep-frozen food product, said first and second ends being closed by respective end structures (17, 19) which are thermally insulated and not rotatable;
the first end (16) being arranged at a higher level than that of said second end (18) in order to provide a slanting of the drum axis suitable for causing an automatic feeding of the food product mass (42) toward the second end (18) along a product feed direction (P);
- a cooling system (26) that injects cryogenic gases at said second end (18) of said drum (1);
- means (28) for providing a depression at said first end (16) in order to cause the very low temperature deep-freezing gas stream to flow in a direction (G) opposite to said food product feed direction (P) inside said drum and to suck and convey the cooling gas stream, after having passed through said drum, toward an outlet stack (30); and
- a plurality of fins (40) for mixing said product (42) to be deep-frozen, said fins being applied on the periphery of the inner surface of said drum (1); **characterized in that** of further comprising
- a plurality of fans (38) arranged in the inner area (5) of said drum (1) and supported by a bridge structure (33) extending along the overall length of said drum.

2. An apparatus according to claim 1, **characterized in that** said bridge structure (33) carrying said fans (38) is connected at its ends to supporting elements (32, 32') respectively connected to said fixed end structures (17, 19) and preferably consisting of a pair of tubular rods (34, 34') arranged near the vertical median plane (M) of the drum (1).

3. An apparatus according to claims 1 and 2, **characterized in that** said fans (38) are mounted on shelves (36) cantilever-wise connected to a lower tubular rod (34') of said bridge structure (33), said fans (38) being offset from said vertical median plane (M) of said drum (1).

4. An apparatus according to claim 3, **characterized in that** the fins of said fans (38) are rotatively driven in opposite rotary directions from each other, alternately.

5. An apparatus according to claims 1 to 4, **characterized in that** said mixing fins (40) arranged inside said drum (1) for mixing the food product during the deep-freezing process are so slanted as to present their attachment side at a forward position with respect to the rotary direction (R) of said drum to facilitate the removal of layers of the food product (42) closest to the inner surface of said drum, causing said layers to fall to the central part of said drum.

6. An apparatus according to claim 5, **characterized in that** said attachment sides of said fins (40) fitted inside said drum (1) are arranged on several planes which are perpendicular to the axis of said drum.

7. An apparatus according to claim 5, **characterized in that** said attachment sides of said fins (40) fitted inside said drum (1) are helically arranged.

## Patentansprüche

1. Vorrichtung zum kontinuierlichen Tiefgefrieren von Lebensmitteln, enthaltend:
- eine Drehtrommel (1) mit einem ersten Ende (16) zum Einführen eines tiefzugefrierenden Produkts und einem zweiten Ende (18) zum Austragen des tiefgefrorenen Lebensmittels, wobei das erste und das zweite Ende durch jeweilige Endaufbauten (17, 18) verschlossen sind, die thermisch isoliert und nicht drehbar sind,
wobei das erste Ende (16) in einer höheren Ebene als das zweite Ende (18) angeordnet ist, um eine Neigung der Trommelachse zu schaffen, die geeignet ist, eine automatische Förderung der Lebensmittelmasse (42) entlang einer Produktförderrichtung (P) zu dem zweiten Ende (18) zu bewirken;
- ein Kühlsystem (26), um Tieftemperaturgas an dem zweiten Ende (18) der Trommel (1) einzublasen;
- eine Einrichtung (28) zum Schaffen eines Unterdruckes an dem ersten Ende (16), um zu bewirken, daß der Tiefgefriergasstrom mit sehr tiefer Temperatur in eine Richtung (G) fließt, die der Produktförderrichtung (P) innerhalb der Trommel entgegengesetzt ist, und um den Kühlgasstrom, nachdem er die Trommel durchströmt hat, anzusaugen und zu einem Auslaßkamin (30) zu fördern; und
- eine Vielzahl von Leitblechen (40) zum Mischen des tiefzugefrierenden Produkts (42), welche Leitbleche an dem Umfang der Innenfläche der Trommel (1) angebracht sind;
**gekennzeichnet durch**
- eine Vielzahl von Gebläsen (38), die in dem Innenbereich (5) der Trommel (1) angeordnet sind und von einem Brückenaufbau (33) getragen sind, der sich über die Gesamtlänge der Trommel erstreckt;

2. Vorrichtung nach Anspruch 1, **dadurch gekennzeichnet, daß** der Brückenaufbau (33), der die Gebläse (38) trägt, an seinen Enden mit Tragelementen (32, 32') verbunden ist, die jeweils mit den feststehenden Endaufbauten (17,19) verbunden sind und vorzugsweise aus einem Paar von rohrförmigen Stangen (34, 34') bestehen, die nahe der vertikalen Mittelebene (M) der Trommel (1) angeordnet sind.

3. Vorrichtung nach Anspruch 1 und 2, **dadurch gekennzeichnet, daß** die Gebläse (38) an Platten (36) montiert sind, die auslegerartig mit einer unteren rohrförmigen Stange (34') des Brückenaufbaus (33) verbunden sind, wobei die Gebläse (38) gegen die vertikale Mittelebene (M) der Trommel (1) versetzt sind.

4. Vorrichtung nach Anspruch 3, **dadurch gekennzeichnet, daß** die Leitschaufeln der Gebläse (38) abwechselnd in jeweils entgegengesetzte Drehrichtungen drehend angetrieben werden.

5. Vorrichtung nach Anspruch 1 bis 4, **dadurch gekennzeichnet, daß** die Mischleitbleche (40), die innerhalb der Trommel (1) angeordnet sind, um das Lebensmittel während des Tiefgefrierprozesses zu mischen, so geneigt sind, daß sie ihre Befestigungsseite bezüglich der Drehrichtung (R) der Trommel in einer vorderen Position darbieten, um das Entfernen von Schichten des Lebensmittels (42), die der Innenfläche der Trommel am nächsten sind, zu erleichtern, so daß diese Schichten in den Mittelteil der Trommel fallen.

6. Vorrichtung nach Anspruch 5, **dadurch gekennzeichnet, daß** die Befestigungsseiten der Leitbleche (40), die innerhalb der Trommel (1) eingesetzt sind, in mehreren Ebenen angeordnet sind, die zu der Achse der Trommel rechtwinklig sind.

7. Vorrichtung nach Anspruch 5, **dadurch gekennzeichnet, daß** die Befestigungsseiten der Leitbleche (40) die innerhalb der Trommel (1) eingesetzt sind, schraubenförmig angeordnet sind.

## Revendications

1. Appareil de congélation continue de produits alimentaires, comprenant :
- un tambour rotatif (1) possédant une première extrémité (16) d'introduction d'un produit à congeler et une seconde extrémité (18) destinée à l'évacuation du produit alimentaire congelé, la première et la seconde extrémité étant fermées par des structures respectives (17, 19) d'extrémité qui sont isolées thermiquement et ne peuvent pas tourner,
la première extrémité (16) ayant un niveau supérieur à celui de la seconde extrémité (18) afin que l'axe du tambour soit incliné d'une manière qui convient à l'avance automatique de la masse (42) de produits alimentaires vers la seconde extrémité (18) dans une direction (P) d'avance de produits,
- un système de refroidissement (26) qui injecte du gaz cryogénique à ladite seconde extrémité (18) dudit tambour (1),
- un dispositif (28) destiné à créer une dépression à la première extrémité (16) afin que le courant de gaz de congélation à très basse température s'écoule dans un sens (G) opposé au sens (P) d'avance des produits alimentaires à l'intérieur du tambour et que le courant de gaz de refroidissement soit aspiré et transporté, après passage dans le tambour, vers une cheminée de sortie (30), et
- plusieurs ailettes (40) de mélange du produit (42) à congeler, les ailettes étant appliquées à la périphérie de la surface interne du tambour (1); **caractérisé en ce qu'**il comporte également
- plusieurs ventilateurs (38) placés dans la région interne (5) du tambour (1) et supportés par une structure en pont (33) qui s'étend sur toute la longueur du tambour.

2. Appareil selon la revendication 1, **caractérisé en ce que** la structure en pont (33) portant les ventilateurs (38) est raccordée à ses extrémités à des éléments de support (32, 32') raccordés respectivement aux structures fixes (17, 19) d'extrémité et est constituée de préférence d'une paire de tiges tubulaires (34, 34') placées près du plan médian vertical (M) du tambour (1).

3. Appareil selon les revendications 1 et 2, **caractérisé en ce que** les ventilateurs (38) sont montés sur des étagères (36) raccordées en porte-à-faux à une tige tubulaire inférieure (34') de la structure en pont (33), les ventilateurs (38) étant décalés par rapport au plan médian vertical (M) du tambour (1).

4. Appareil selon la revendication 3, **caractérisé en ce que** les ailettes des ventilateurs (38) sont entraînées en rotation en sens opposés de rotation, en alternance.

5. Appareil selon les revendications 1 à 4, **caractérisé en ce que** les ailettes de mélange (40) placées à l'intérieur du tambour (10) pour le mélange du produit alimentaire pendant l'opération de congélation ont une inclinaison telle qu'elles présentent leur côté de fixation à une position avancée par rapport au sens de rotation (R) du tambour pour faciliter l'enlèvement des couches de produit alimentaire (42) les plus proches de la surface interne du tambour en provoquant ainsi la chute de ces couches vers la partie centrale du tambour.

6. Appareil selon la revendication 5, **caractérisé en ce que** les côtés de fixation des ailettes (40) montées à l'intérieur du tambour (1) sont disposés dans plusieurs plans qui sont perpendiculaires à l'axe du tambour.

7. Appareil selon la revendication 5, **caractérisé en ce que** les côtés de fixation des ailettes (40) montées à l'intérieur du tambour (1) sont disposés en hélice.
